# EUROPEAN PATENT APPLICATION

(11) **EP 3 211 641 A1**
(43) Date of publication of application: **30.08.2017**
(21) Application number: 16157259.9
(22) Date of filing: 25.02.2016
(51) Int. Cl.: H01B 3/00, H01B 3/16

(54) **VARNISH FOR ELECTRICAL INSULATING COMPONENTS**

(71) Applicant: ABB Technology AG, 8050 Zürich (CH)
(72) Inventor: Donzel, Lise, 5430 Wettingen (CH); Gremaud, Robin, 3007 Bern (CH)
(74) Representative: ABB Patent Attorneys

(57) **Abstract**

The proposed invention concerns a varnish for use on a surface of an electrical insulator body. The varnish has a fluoropolymeric matrix and a semi-conductive metal oxide filler. The present invention further concerns an electrical insulator body whose surfaces are coated with such a varnish.

## Description

### Technical Field

The invention relates to a varnish for electrical insulating components that are suitable to be used in a gas-insulated system such as a gas insulated switchgear (GIS), in particular for HVDC applications.

### Background Art

The dielectric strength of the solid insulator components like partition or barrier insulators, support insulators, push-pull rods, glass-fiber or aramide reinforced insulator and the like is key to a satisfactory and reliable insulation coordination of gas-insulated systems. Electric charge accumulation on the insulating surfaces leads to surface potential distortion and to a reduction of the breakdown strength.

Minimizing the surface charging and control surface charge decay by applying a resistive coating on the insulating surface of the electrical insulation component is known from DE3634946A1, for example. DE3634946A1 promotes using a coating whose DC conductivity is higher than that of the underlying insulator material. The coating comprises a powder filler of chrome oxide (Cr₂O₃), an iron oxide (Fe₂O₃) or a mixture thereof and a resinous binder matrix. The suggested matrix materials are epoxy resins, alkyd resins, polyurethane resins, polyester resins, silicon resins and acrylic resins. The problem of the teaching disclosed in DE3634946A1 resides in that the epoxy based coating is very sensitive to SF₆ decomposition products, in particular to hydrofluoric acid resulting from SF₄ in combination with residual moisture present in the gas insulated device. Hydrofluoric acid is a very corrosive acid attacking the oxide filler such that the latter becomes more and more conductive when in use. This leads to a thermal runaway where the ohmic losses in the coating are higher than the thermal dissipation capability such that the temperature increases until irreversible damage to the coating is done.

A failure of the electrical insulator component inevitably leads to an undesired loss of the operability of the gas-insulated system.

### General disclosure of the invention

The object to be solved by the present invention resides in providing a corrosion-resistant varnish with a stable conductivity for the purpose of surface charge dissipation that is suitable for a use in a gas-insulated system.

The above object is achieved by a varnish for use on a surface of an electrical insulator component, which varnish comprises a fluoropolymeric matrix as well as a semi-conductive metal oxide filler. That varnish forms a stable diffusion barrier to hydrofluoric acid and show stable electrical properties. Therefore, the gas-insulated system in which the electrical insulating component is placed will not suffer from failure.

The DC conductivity has a well-controlled temperature and electric field dependence. The table shows for sample 4 that its DC conductivity value does not increase within the lifetime of the system. The varnish has a stable DC conductivity when exposed to the by-products and decomposition products of SF₆ gas.

In addition, the stable fluorinated varnish is applicable to the electrical insulating body in an economic and simple way by a standard deposition method such as spraying and is therefore more practical than other fluorination techniques that require surface treatment of the whole insulator.

Such a varnish renders the electrical insulator particularly suitable for a use in a gas-insulated HVDC system. Hereinafter the term HV is understood as "high voltage" having a nominal voltage value of at least 1 kV, in particular of at least 50kV. The proposed varnish is suitable also for nominal voltages in a range between 300kV and 1000kV.

The above varnish can also be used to protect the underlying insulator body against corrosion from the by-products of SF₆, i.e. additionally to the electric charge dissipation function.

The proposed varnish further allows a replacement of the insulator body commonly comprising an epoxy matrix filled with alumina (due to the corrosion-resistant property of alumina) by an insulator body comprising an epoxy matrix filled with silicate and then coated with this fluoropolymer-based coating. Since the costs for silicate are way lower than for an aluminum oxide, the overall expenses for the insulator component can be lowered.

In another exemplary embodiment of an electrical insulator component, the insulator body is formed by glass-fiber "loops" used to assemble varistor elements in surge arrestors. The aforementioned varnish ensures a combined surface charge/surface potential control and corrosion protection of the glass-fiber "loops" and renders them suitable for a use in future HVDC gas-insulated surge arresters.

Depending on the requirements, the semi-conductive metal oxide filler can be an iron oxide, a chrome oxide or a mixture thereof.

The aforementioned advantageous properties confer one by one to the electrically insulating component having such a varnish. In that case, the electrically insulating component comprises an electrical insulating body having an outer surface to be exposed to an electrically insulating gas and a varnish applied to said outer surface.

The electrical insulating body can comprise an inorganic filler and an epoxy-based matrix, wherein the inorganic filler can be a metal oxide or a silicate filler. Compared to conventional epoxy based insulators for GIS systems having an insulating body with an epoxy-base matrix and an aluminum oxide filler, the present inventive concept allows replacing the aluminum oxide filler against a less expensive silicate filler and thus decreasing the overall manufacturing costs of the electrical insulator component. Electrical insulating bodies having an inorganic filler in the form of a metal oxide such as Fe₂O₃, Al₂O₃ or Ti₂O₃ for example, are advantageous in that they have a better corrosion resistance than those comprising silicate fillers.

Exemplary embodiments of the electrical insulator component are a barrier insulator, a support insulator, or a push-pull rod and the like. Alternatively, the electrical insulator component can be one of a glass-fiber reinforced insulator and an aramide reinforced insulator.

In case of a gas-insulated system comprising a gas-tight enclosure and an electrical insulation gas and at least one of the aforementioned electrically insulating components, the advantages of the varnish is to prevent dielectric failures resulting from surface potential distortion and reduction of the breakdown strength. The present invention is particularly suitable for gas insulated high voltage systems, having a nominal voltage of at least 1 kV and comprising at least one of the aforementioned electrically insulating components. Since dielectric failures resulting from surface potential distortion and reduction of the breakdown strength of an insulator component become a particularly relevant issue in gas insulated HVDC systems operated at 50kV and higher or up to 300-1000kV, where required, the present invention is a good and simple means to address the needs of such systems.

### Examples:

The following table shows a comparison of the SF₄ corrosion resistance of the DC conductivity of four different varnish samples. All samples have a filler content of 30 vol%.

Sample 1 has been exposed to corrosion conditions of an insulating gas with an SF₄:SF₆ ratio of 1:4000 for 1 h at 25°C.

Samples 2 to 4 have been exposed to corrosion conditions of an insulating gas with an SF₄:SF₆ ratio of 5:95 for 3 weeks at 130°C.

| **sample number** | **Matrix (trade name, *supplier*)** | **Filler (trade name, *supplier*)** | **DC conductivity ratio after/before corrosion σ_{after}/σ_{before}** |
|---|---|---|---|
| 1 | Epoxy (Penguard, *Jotun*) | Cr₂O₃ (GNM, *Bayer)* | 100 |
| 2 | Alkyd (Damicoat, *Astorit)* | Cr₂O₃ (GN-M, *Lanxess)* | 10 |
| 3 | Polyurethane (Nuvovern, *Mäder*) | Cr₂O₃ (GN-M, *Lanxess)* | 10 |
| 4 | Fluoropolymer (Dyneon, *3M)* | Cr₂O₃ (GN-M, *Lanxess)* | 1 |

The table shows that the epoxy based coating of sample 1 presented in DE3634946A1 is very sensitive to SF₆ decay products leading to an increase of the DC conductivity after only one hour of a factor 100 already at a low SF₄ concentration.

Sample 2 and sample 3 both show that the non-fluorinated matrix binders presented also do not show a stable DC conduction characteristics on the long term when in contact with SF₄.

The reason for such a dissatisfactory behavior resides in the corrosion of the coating (fluorination). As mentioned before, SF₄ reacts with the water molecules present in the gas insulated device or on the coating to form hydrofluoric acid (HF). HF is in turn very reactive toward non-fluorinated matrixes and fillers, resulting in partial fluorination of the coating and an increase in the measured DC conductivity.

Sample 4 contains a matrix that is already saturated with Fluor atoms and is effectively embedding the functional metal oxide (Cr₂O₃) such that the DC conductivity stays stable even after prolonged exposure to high concentration of SF₄ at high temperature.

## Claims

1. A varnish for use on a surface of an electrical insulator component, **characterized in that** the varnish comprising a fluoropolymeric matrix and a semi-conductive metal oxide filler.

2. The varnish according to claim 1, **characterized in that** the semi-conductive metal oxide filler is an iron oxide.

3. The varnish according to claim 1, **characterized in that** the semi-conductive metal oxide filler is a chrome oxide.

4. An electrically insulating component, comprising an electrical insulating body having an outer surface to be exposed to an electrically insulating gas, and a varnish according to any one of the previous claims applied to the outer surface.

5. The electrically insulating component according to claim 4, wherein the electrical insulating body comprises an inorganic filler and an epoxy-based matrix, and wherein the inorganic filler is a metal oxide or a silicate filler.

6. The electrically insulating component according to claim 5, wherein the inorganic filler is a metal oxide comprising aluminum.

7. The electrically insulating component according to any one of claims 4 to 6, wherein the electrically insulating component is a barrier insulator, a support insulator, or a push-pull rod.

8. The electrically insulating component according to claim 4, wherein the electrical insulating body is one of a glass-fiber reinforced insulator body and an aramide reinforced insulator body.

9. A gas-insulated system, comprising a gas-tight enclosure, an electrical insulation gas and at least one electrically insulating component according any one of claims 4 to 8 provided in said gas-tight enclosure.

10. The gas-insulated system according to claim 9, wherein the gas-insulated system is a high voltage gas insulating system for a nominal voltage of more than 1 kV.

11. The gas-insulated system according to claim 9, wherein the gas-insulated system is a high voltage gas insulating system for a nominal voltage of more than 50kV.

12. The gas-insulated system according to claim 9, wherein the gas-insulated system is a high voltage gas insulating system for a nominal voltage of 300kV to 1000 kV.

13. The gas-insulated system according to claim 9, wherein the gas-insulated system is a HVDC system.
